# EUROPÄISCHE PATENTANMELDUNG

(11) **EP 3 483 250 A1**
(43) Veröffentlichungstag der Anmeldung: **15.05.2019**
(21) Anmeldenummer: 18197351.2
(22) Anmeldetag: 27.09.2018
(51) Int. Cl.: C11D 3/386

(54) **ENZYMHALTIGES WASCH- ODER REINIGUNGSMITTEL**

(30) Priorität: 09.11.2017 DE 102017219993
(71) Anmelder: Henkel AG & Co. KGaA, 40589 Düsseldorf (DE)
(72) Erfinder: Wieland, Susanne, 41541 Zons/Dormagen (DE); Mussmann, Nina, 47877 Willich (DE); Degering, Christian, 40699 Erkrath (DE); Dreja, Michael, 41469 Neuss (DE); Laufs, Brian, 41363 Jüchen (DE)

(57) **Zusammenfassung**

Die vorliegende Erfindung betrifft Wasch- oder Reinigungsmittel, die zwei räumlich voneinander getrennte enzymhaltige Zusammensetzungen A und B umfassen, wobei Zusammensetzung A flüssig ist und mindestens eine Protease, vorzugsweise mindestens eine Metalloprotease, umfasst; und Zusammensetzung B mindestens ein von der Protease in der ersten enzym-haltigen Phase unterschiedliches Enzym umfasst, sowie ein Verfahren zum Waschen von Textilien oder maschinellen Geschirrspülen unter Verwendung dieses Mittels.

## Beschreibung

Die vorliegende Erfindung betrifft Wasch- oder Reinigungsmittel, die zwei räumlich voneinander getrennte enzymhaltige Zusammensetzungen A und B umfassen, wobei Zusammensetzung A flüssig ist und mindestens eine Protease, vorzugsweise mindestens eine Metalloprotease, umfasst; und Zusammensetzung B mindestens ein von der Protease in der ersten enzym-haltigen Phase unterschiedliches Enzym umfasst, sowie ein Verfahren zum Waschen von Textilien oder maschinellen Geschirrspülen unter Verwendung dieses Mittels.

Das wichtigste Kriterium sowohl beim Waschen von Textilien als auch beim maschinellen Geschirrspülen ist die Reinigungsleistung an verschiedensten Anschmutzungen. Insofern besteht generell Bedarf an Wasch- und Geschirrspülmitteln mit gesteigerter Reinigungsleistung. Zusätzlich ist ein genereller Trend aus Umweltschutzgründen auf Phosphate zu verzichten zu beobachten. Es stellt sich somit das Problem, phosphatfreie Mittel bereitzustellen, ohne dass die Reinigungsleistung oder Stabilität beeinträchtigt wird.

Um Anschmutzungen effektiv entfernen zu können, benötigen solche Mittel im Allgemeinen Alkalität. Für viele weitere Anschmutzungen werden Enzyme benötigt, beispielsweise Amylasen und Proteasen. Es stellt sich allerdings das Problem, dass Alkalität und Enzyme zusammen nicht stabil formuliert werden können.

In flüssigen Wasch- und Geschirrspülmitteln sind außerdem spezielle Stabilisatoren notwendig, um die Enzyme zu stabilisieren. Diese schließen unter anderem Calciumsalze und speziell für Proteasen zusätzlich Polyole und/oder Borsäure ein.

Aufgrund der Inkompatibilität der üblichen Bestandteile ist es üblich, solche Mittel mit verschiedenen Phasen bzw. in Form von mehreren räumlich getrennten Zusammensetzungen zu formulieren. Dabei werden die Enzyme üblicherweise getrennt von anderen, mit diesen inkompatiblen Bestandteilen, wie Alkaliquellen, Bleiche oder ähnlichen, formuliert. Derartige mehrphasige Formulierungen in Form von Tabs oder Mehrkammerpouches sind sowohl für maschinelle Geschirrspülmittel als auch Textilwaschmittel bekannt.

Es stellt sich allerdings das Problem, dass auch die in der enzym-haltigen Phase enthaltenen Enzyme sich oftmals in ihrer Stabilität gegenüber anderen Bestandteilen sowie pH-Werten signifikant unterscheiden. Obwohl es bekannt ist, hinsichtlich ihrer Stabilität optimierte Enzymvarianten zu verwenden, sind diese oftmals an alkalische pH-Werte angepasst oder es müssen im Zuge der Stabilisierung Einbußen hinsichtlich der Leistung hingenommen werden.

Die Aufgabe der vorliegenden Erfindung bestand daher darin, ein Wasch- oder Reinigungsmittel, vorzugsweise Wasch- oder Geschirrspülmittel, zur Verfügung zu stellen, das die genannten Stabilitätsprobleme überwindet und dabei eine gute Reinigungsleistung aufweist.

Es wurde nun gefunden, dass eine stabile und hoch performante Formulierung bereitgestellt werden kann, wenn die in dieser enthaltenen Enzyme in zwei voneiander räumlich getrennten Zusammensetzungen formuliert werden, wobei die erste Zusammensetzung eine Protease, vorzugsweise eine Metalloprotease, enthält, und die zweite Zusammensetzungen die übrigen Enzyme umfasst.

Ein erster Gegenstand der vorliegenden Erfindung ist daher ein Wasch- oder Reinigungsmittel, dadurch gekennzeichnet, dass das Mittel zwei räumlich voneinander getrennte enzymhaltige Zusammensetzungen A und B aufweist, wobei
(a) Zusammensetzung A flüssig ist und mindestens eine Protease, vorzugsweise mindestens eine Metalloprotease, umfasst; und
(b) Zusammensetzung B mindestens ein von der Protease in der ersten enzym-haltigen Phase unterschiedliches Enzym umfasst.

In einem weiteren Aspekt betrifft die Erfindung auch die Verwendung solcher mehrphasigen Wasch- oder Reinigungsmittel zum Waschen von Textilien oder maschinellen Reinigen von Geschirr.

Schließlich betrifft die Erfindung auch Verfahren zum Waschen von Textilien oder maschinellen Reinigen von Geschirr, dadurch gekennzeichnet, dass in mindestens einem Verfahrensschritt ein Wasch- oder Reinigungsmittel wie hierin beschrieben angewendet wird

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Unter den Gegenstand der Erfindung fallen alle denkbaren Wasch- oder Reinigungsmittelarten, sowohl Konzentrate als auch unverdünnt anzuwendende Mittel, zum Einsatz im kommerziellen Maßstab, in der Waschmaschine oder bei der Handwäsche beziehungsweise -reinigung. Dazu gehören beispielsweise Waschmittel für Textilien, Teppiche, oder Naturfasern, für die die Bezeichnung Waschmittel verwendet wird. Dazu gehören beispielsweise auch Geschirrspülmittel für Geschirrspülmaschinen oder manuelle Geschirrspülmittel oder Reiniger für harte Oberflächen wie Metall, Glas, Porzellan, Keramik, Kacheln, Stein, lackierte Oberflächen, Kunststoffe, Holz oder Leder, für die die Bezeichnung Reinigungsmittel verwendet wird, also neben manuellen und maschinellen Geschirrspülmitteln beispielsweise auch Scheuermittel, Glasreiniger, WC-Duftspüler, usw. Zu den Wasch- und Reinigungsmitteln im Rahmen der Erfindung zählen ferner Waschhilfsmittel, die bei der manuellen oder maschinellen Textilwäsche zum eigentlichen Waschmittel hinzudosiert werden, um eine weitere Wirkung zu erzielen. Ferner zählen zu Wasch- und Reinigungsmittel im Rahmen der Erfindung auch Textilvor- und Nachbehandlungsmittel, also solche Mittel, mit denen das Wäschestück vor der eigentlichen Wäsche in Kontakt gebracht wird, beispielsweise zum Anlösen hartnäckiger Verschmutzungen, und auch solche Mittel, die in einem der eigentlichen Textilwäsche nachgeschalteten Schritt dem Waschgut weitere wünschenswerte Eigenschaften wie angenehmen Griff, Knitterfreiheit oder geringe statische Aufladung verleihen. Zu letztgenannten Mittel werden u.a. die Weichspüler gerechnet.

"Mindestens ein", wie hierin verwendet, schließt ein, ist aber nicht begrenzt auf 1, 2, 3, 4, 5, 6 und mehr. Bezogen auf einen Inhaltsstoff bezieht sich die Angabe auf die Art des Inhaltsstoffs und nicht auf die absolute Zahl der Moleküle. "Mindestens ein Builder" bedeutet somit beispielsweise mindestens eine Art von Builder, d.h. dass eine Art von Builder oder eine Mischung mehrerer verschiedener Builder gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Wenn hierin auf Molmassen Bezug genommen wird, beziehen sich diese Angaben immer auf die zahlenmittlere Molmasse Mₙ, sofern nicht explizit anders angeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.

"Phosphatfrei" und "phosphonatfrei", wie hierin verwendet, bedeutet, dass die betreffende Zusammensetzung im Wesentlichen frei von Phosphaten bzw. Phosphonaten ist, d.h. insbesondere Phosphate bzw. Phosphonate in Mengen kleiner als 0,1 Gew.-%, vorzugsweise kleiner als 0,01 Gew.-%, bezogen auf die jeweilige Zusammensetzung, enthält.

"Flüssig", wie hierin verwendet, schließt Flüssigkeiten und Gele sowie auch pastöse Zusammensetzungen ein. Es ist bevorzugt, dass die flüssigen Zusammensetzungen bei Raumtemperatur fließfähig und gießbar sind, es ist aber auch möglich, dass sie eine Fließgrenze aufweisen.

Da die Mittel der Erfindung teilweise wasserarm bis wasserfrei sind, bezieht sich der angegebene pH-Wert in verschiedenen Ausführungsformen auf eine 10% Lösung der jeweiligen Zusammensetzung in destilliertem Wasser bei 25°C. "Wasserarm" bezieht sich auf Wassergehalte von bis zu 20 Gew.-%, vorzugsweise bis 15 Gew.-%, noch bevorzugter bis 10 Gew.-%, und "wasserfrei" bezieht sich auf Wassergehalte bis 5 Gew.-%, insbesondere Zusammensetzungen in denen Wasser nicht absichtlich zugesetzt wird, sondern maximal mit anderen Bestandteilen eingeschleppt wird. Der Wassergehalt kann mittels Karl-Fischer-Titration bestimmt werden.

Der Ausdruck "räumlich getrennt" in Bezug auf die Zusammensetzungen, wie hierin verwendet, bedeutet, dass die Zusammensetzungen vor der Verwendung nicht miteinander in Kontakt kommen können. Üblicherweise wird das Mittel dazu in einer Mehrkammerverpackung, wie beispielsweise einer Flasche oder einem Pouch, bereitgestellt, insbesondere einer Zweikammerflasche oder einem Zweikammerpouch, wobei sich die jeweilige Zusammensetzung getrennt von der/den anderen Zusammensetzung(en) in einer separaten Kammer befindet.

Vorzugsweise enthält Zusammensetzung A mindestens eine Metalloprotease.

Der Ausdruck "Metalloprotease", wird hierin in seinem im Gebiet der Enzymforschung üblichen Sinne verwendet und bezeichnet eine Protease, die ein gebundenes Metallion erfordert, um katalytisch aktiv zu sein. Üblicherweise handelt es sich dabei um ein Zinkion. Die Metallproteasen sind vorzugsweise neutrale Metalloproteasen, d.h. solche die u.a. auch bei einem neutralen pH aktiv sind und Zinkionen für ihre katalytische Wirkung erfordern. Das Molekulargewicht solcher Proteasen liegt üblicherweise im Bereich von 30 bis 40 kDa. Die neutralen Metalloproteasen werden auch als "neutrale Metalloendopeptidasen" bezeichnet und schließen die Enzyme in der Klasse EC 3.4.24.4 ein.

In verschiedenen Ausführungsformen wird die mindestens eine Metalloprotease ausgewählt aus Metalloproteasen aus B. *amyloliquefaciens* und Varianten davon, vorzugsweise einer Metallprotease die eine Aminosäuresequenz umfasst, die mindestens 80% Sequenzidentität zu der in SEQ ID NO:1 angegebenen Aminosäuresequenz über die gesamte Länge aufweist. In verschiedenen Ausführungsformen weist die Aminosäuresequenz mindestens 81, 82, 83, 84, 85, 86, 87, 88, 89, 90, 90,5, 91, 91,5, 92, 92,5, 93, 93,5, 94, 94,5, 95, 95,5, 96, 96,2, 96,4, 96,6, 96,8, 97,0, 97,2, 97,4, 97,6, 97,8, 98,0, 98,2, 98,4, 98,6, 98,8, 99,0, 99,1, 99,2, 99,3, 99,4, 99,5, 99,6, 99,7, 99,8, 99,9 oder 100,0% Sequenzidentität zu der in SEQ ID NO:1 angegebenen Aminosäuresequenz über die gesamte Länge auf. In verschiedenen Ausführungsformen besteht die Metalloprotease aus einer solchen Sequenz, insbesondere aus der in SEQ ID NO:1 angegebenen Sequenz. In weiteren Ausführungsformen werden auch Varianten dieser Proteasen erfasst, die gegenüber den oben beschriebenen Sequenzen N- und/oder C-terminal verkürzt oder um 1-50, beispielsweise 1-30, Aminosäuren verlängert sind und/oder Insertionen, Substitutionen oder Deletionen aufweisen, wobei allerdings die Proteaseaktivität beibehalten wird, insbesondere mindestens 70% der Aktivität des nicht verkürzten/nicht verlängerten/nicht mutierten Enzymes beträgt. Die Verkürzung oder Verlängerung an einem oder beiden Termini beträgt vorzugsweise jeweils 1-50 Aminosäuren, insbesondere 1-30, beispielsweise 1, 2, 3, 4, 5, 6, 7, 8, 9, 10, 11, 12, 13, 14, 15, 16, 17, 18, 19, 20 Aminosäuren. Eine Verlängerung kann sich beispielsweise dadurch ergeben, dass N-terminal ein Signalpeptid oder ein Fragment eines solchen Signalpeptids vorgeschaltet ist, welches nicht oder nicht vollständig abgespalten wurde. Ebenso kann sich eine Verkürzung dadurch ergeben, dass eine derartige Spaltung weiter verkürzte Nebenprodukte generiert.

Die Bestimmung der Identität von Nukleinsäure- oder Aminosäuresequenzen erfolgt durch einen Sequenzvergleich. Dieser Sequenzvergleich basiert auf dem im Stand der Technik etablierten und üblicherweise genutzten BLAST-Algorithmus (vgl. beispielsweise Altschul, S.F., Gish, W., Miller, W., Myers, E.W. & Lipman, D.J. (1990) "Basic local alignment search tool." J. Mol. Biol. 215:403-410, und Altschul, Stephan F., Thomas L. Madden, Alejandro A. Schaffer, Jinghui Zhang, Hheng Zhang, Webb Miller, and David J. Lipman (1997): "Gapped BLAST and PSI-BLAST: a new generation of protein database search programs"; Nucleic Acids Res., 25, S.3389-3402) und geschieht prinzipiell dadurch, dass ähnliche Abfolgen von Nukleotiden oder Aminosäuren in den Nukleinsäure- oder Aminosäuresequenzen einander zugeordnet werden. Eine tabellarische Zuordnung der betreffenden Positionen wird als Alignment bezeichnet. Ein weiterer im Stand der Technik verfügbarer Algorithmus ist der FASTA-Algorithmus. Sequenzvergleiche (Alignments), insbesondere multiple Sequenzvergleiche, werden mit Computerprogrammen erstellt. Häufig genutzt werden beispielsweise die Clustal-Serie (vgl. beispielsweise Chenna et al. (2003): Multiple sequence alignment with the Clustal series of programs. Nucleic Acid Research 31, 3497-3500), T-Coffee (vgl. beispielsweise Notredame et al. (2000): T-Coffee: A novel method for multiple sequence alignments. J. Mol. Biol. 302, 205-217) oder Programme, die auf diesen Programmen beziehungsweise Algorithmen basieren. Ferner möglich sind Sequenzvergleiche (Alignments) mit dem Computer-Programm Vector NTI® Suite 10.3 (Invitrogen Corporation, 1600 Faraday Avenue, Carlsbad, Kalifornien, USA) mit den vorgegebenen Standardparametern, dessen AlignX-Modul für die Sequenzvergleiche auf ClustalW basiert. Soweit nicht anders angegeben, wird die hierin angegebene Sequenzidentität mit dem BLAST-Algorithmus bestimmt.

Solch ein Vergleich erlaubt auch eine Aussage über die Ähnlichkeit der verglichenen Sequenzen zueinander. Sie wird üblicherweise in Prozent Identität, das heißt dem Anteil der identischen Nukleotide oder Aminosäurereste an denselben oder in einem Alignment einander entsprechenden Positionen angegeben. Der weiter gefasste Begriff der Homologie bezieht bei Aminosäuresequenzen konservierte Aminosäure-Austausche in die Betrachtung mit ein, also Aminosäuren mit ähnlicher chemischer Aktivität, da diese innerhalb des Proteins meist ähnliche chemische Aktivitäten ausüben. Daher kann die Ähnlichkeit der verglichenen Sequenzen auch Prozent Homologie oder Prozent Ähnlichkeit angegeben sein. Identitäts- und/oder Homologieangaben können über ganze Polypeptide oder Gene oder nur über einzelne Bereiche getroffen werden. Homologe oder identische Bereiche von verschiedenen Nukleinsäure- oder Aminosäuresequenzen sind daher durch Übereinstimmungen in den Sequenzen definiert. Solche Bereiche weisen oftmals identische Funktionen auf. Sie können klein sein und nur wenige Nukleotide oder Aminosäuren umfassen. Oftmals üben solche kleinen Bereiche für die Gesamtaktivität des Proteins essentielle Funktionen aus. Es kann daher sinnvoll sein, Sequenzübereinstimmungen nur auf einzelne, gegebenenfalls kleine Bereiche zu beziehen. Soweit nicht anders angegeben beziehen sich Identitäts- oder Homologieangaben in der vorliegenden Anmeldung aber auf die Gesamtlänge der jeweils angegebenen Nukleinsäure- oder Aminosäuresäuresequenz.

Bei der Protease handelt es sich vorzugsweise um eine reife (mature) Protease, d.h. um das katalytisch aktive Molekül ohne Signal- und/oder Propeptid(e). Soweit nicht anders angegeben beziehen sich auch die angegebenen Sequenzen auf jeweils reife (prozessierte) Enzyme.

In verschiedenen Ausführungsformen der Erfindung ist die Protease ein frei vorliegendes Enzym. Dies bedeutet, dass die Protease mit allen Komponenten eines Mittels direkt agieren kann und, da es sich bei der Zusammensetzung um ein Flüssigmittel handelt, dass die Protease direkt mit dem Lösungsmittel des Mittels (z.B. Wasser) in Kontakt steht. In anderen Ausführungsformen kann ein Mittel Proteasen enthalten, die einen Interaktionskomplex mit anderen Molekülen bilden oder die eine "Umhüllung" enthalten. Hierbei kann ein einzelnes oder mehrere Protease Moleküle durch eine sie umgebende Struktur von den anderen Bestandteilen des Mittels getrennt sein. Eine solche trennende Struktur kann entstehen durch, ist allerdings nicht beschränkt auf, Vesikel, wie etwa eine Micelle oder ein Liposom. Die umgebende Struktur kann aber auch ein Viruspartikel, eine bakterielle Zelle oder eine eukaryotische Zelle sein.

Die Zusammensetzung A enthält die mindestens eine Protease vorzugsweise in einer Menge Aktivprotein von 0,1 bis 50 Gew.-%, vorzugsweise 0,1 bis 20 Gew.-%, bezogen auf das Gesamtgewicht der Zusammensetzung.

Die Proteinkonzentration kann generell mit Hilfe bekannter Methoden, zum Beispiel dem BCA-Verfahren (Bicinchoninsäure; 2,2'-Bichinolyl-4,4'-dicarbonsäure) oder dem Biuret-Verfahren (A. G. Gornall, C. S. Bardawill und M.M. David, J. Biol. Chem., 177 (1948), S. 751-766) bestimmt werden. Die Bestimmung der Aktivproteinkonzentration kann diesbezüglich über eine Titration der aktiven Zentren unter Verwendung eines geeigneten irreversiblen Inhibitors und Bestimmung der Restaktivität (vgl. M. Bender et al., J. Am. Chem. Soc. 88, 24 (1966), S. 5890-5913) erfolgen.

In verschiedenen Ausführungsformen enthält die enzymhaltige Zusammensetzung A mindestens ein organisches Lösungsmittel, vorzugsweise ausgewählt aus Alkoholen, besonders bevorzugt mehrwertigen bei Standardbedingungen (20°C, 1013 mbar) flüssigen mehrwertigen Alkoholen, insbesondere Glycerin, 1,2-Propandiol und Sorbitol, sowie Mischungen davon. Wenn diese enthalten sind, beträgt die Menge vorzugsweise von 0,1 bis 99,9 Gew.-%, weiter bevorzugt 10 bis 90 Gew.-%, bezogen auf das Gesamtgewicht der Zusammensetzung A.

In verschiedenen Ausführungsformen ist es bevorzugt, dass die enzymhaltige Zusammensetzung A neben der mindestens einen Protease, insbesondere Metalloprotease, keine weiteren Enzyme umfasst, insbesondere keine anderen Proteasen und/oder Amylasen.

In verschiedenene Ausführungsformen enthält die enzymhaltige Zusammensetzung A mindestens ein Tensid, vorzugsweise einen alkoxylierten Alkohol, weiter bevorzugt ein Fettalkoholethoxylat, vorzugsweise in einer Menge von 0,01 bis 10, besonders bevorzugt 0,01 bis 5 Gew.-%, bezogen auf das Gesamtgewicht der Zusammensetzung.

Die Zusammensetzung kann weiterhin mindestens einen Enzymstabilisator und/oder Proteaseinhibitor enthalten, vorzugsweise in einer Menge von 0,1 bis 50 Gew.-%, weiter bevorzugt 0,1 bis 20 Gew.-%, bezogen auf das Gesamtgewicht der Zusammensetzung enthalten. Als Stabilisatoren/Inhibitoren kommen alle im Stand der Technik für diesen Zweck bekannten Verbindungen in Frage.

Als reversible Proteaseinhibitoren sind im Stand der Technik Polyole, insbesondere Glycerin und 1,2-Propylenglycol, Benzamidin-Hydrochlorid, Borax, Borsäuren, Boronsäuren oder deren Salze oder Ester etabliert. Ein besonders guter Schutz ergibt sich, wenn Borsäurederivate zusammen mit Polyolen eingesetzt werden, da diese dann einen das Enzym stabilisierenden Komplex bilden können. Auch Peptidaldehyde, das heißt Oligopeptide mit reduziertem C-Terminus, insbesondere solche aus 2 bis 50 Monomeren sind zu diesem Zweck beschrieben. Zu den peptidischen reversiblen Proteaseinhibitoren gehören unter anderem Ovomucoid und Leupeptin. Auch spezifische, reversible Peptid-Inhibitoren sowie Fusionsproteine aus Proteasen und spezifischen Peptid-Inhibitoren werden hierfür eingesetzt.

Weitere etablierte Enzymstabilisatoren sind Aminoalkohole wie Mono-, Di-, Triethanol- und -propanolamin und deren Mischungen, aliphatische Carbonsäuren bis zu C₁₂, wie beispielsweise Bernsteinsäure, andere Dicarbonsäuren oder Salze der genannten Säuren. Auch endgruppenverschlossene Fettsäureamidalkoxylate sind für diesen Zweck etabliert.

Als Enzymstabilisatoren geeignet sind beispielsweise auch wasserlösliche Calciumsalze, wie Calciumchlorid (CaCl₂), Calciumlactat oder Calciumacetat sowie andere Salze von Calcium mit alpha-Hydroxycarbonsäuren oder alpha-Aminosäuren. Weiterhin geeignet sind organische (Metall-)Salze wie Formiate und Acetate.

In verschiedenen Ausführungsformen können als Enzymstabilisatoren weiterhin die Verbindungen der allgemeinen Strukturformel

Z-A-(A)ₙ-NH-CH(R)-Y (I)

eingesetzt werden, wobei A ein Aminosäurerest ist (bevorzugte Aminosäurereste A sind ausgewählt aus Ala, Gly, Val, Ile, Leu, Phe, Lys); Y-C(O)-X oder CHOH-SO₃B ist, B Wasserstoff oder ein geeignetes Kation, insbesondere (Alkali)metallkation ist, X Wasserstoff oder CF₃ ist; Z ein N-Verkappungsrest ausgewählt aus Phosphoramidat [(R'O)₂(O)P-], Sulfenamid [(SR')₂-], Sulfonamid [(R'(O)₂S-], Sulfonsäure [SO₃H], Phosphinamid [(R')₂(O)P-], Sulfamoyl Derivaten [R'O(O)₂S-], Thioharnstoff [(R')₂N(O)C-], Thiocarbamat [R'O(S)C-], Phosphonat [R'-P(O)OH], Amidophosphat [R'O(OH)(O)P-], Carbamat (R'O(O)C-) und Harnstoff (R'NH(O)C-) ist, wobei jedes R' unabhängig ausgewählt wird aus geradkettigen oder verzweigten C₁-C₆ unsubstituierten Alkyl-, Phenyl-, C₇-C₉ Alkylaryl- und Cycloalkyl-Resten, wobei der Cycloalkylring ein C₄-C₈ Cycloalkylring sein kann und ein oder mehrere Heteroatome enthalten kann, die ausgewählt werden aus O, N, und S; R ausgewählt wird aus geradkettigen oder verzweigten C₁-C₆ unsubstituierten Alkyl-, Phenyl und C₇-C₉ Alkylarylresten, insbesondere -CH₂-Phenyl oder -CH₂-(4-Hydroxyphenyl); und n 0, 1 oder 2, vorzugsweise 0 oder 1 ist, wobei wenn n nicht 0 ist, die Aminosäuren über eine Peptidbindung verknüpft sind.

Bevorzugte Reste R werden ausgewählt aus Methyl, iso-Propyl, sec-Butyl, iso-Butyl, -C₆H₅, -CH₂-C₆H₅, -CH₂-C₆H₄OH (insbesondere CH₂-(4-Hydroxyphenyl), und -CH₂-CH₂-C₆H₅, so dass der Teil -NH-CH(R)-Y der Verbindung der Formel (I) von den Aminosäuren Ala, Val, Ile, Leu, Tyr, PGly (Phenylglycin), Phe und HPhe (Homophenylalanine) abgeleitet ist, indem die Carboxylgruppe in eine Aldehyd- oder Trifluoromethylketongruppe bzw. ein Aldehyd-Hydrogensulfit-Addukt umgewandelt wird. Obwohl solche Reste daher keine Aminosäuren sind (obwohl sie aus einem Aminosäurevorläufer synthetisiert sein können), wird hierin bei den beispielhaft aufgelisteten Enzymstabilisatoren der Einfachheit halber der Aldehydteil der Inhibitoren, der von der entsprechenden Aminosäuren abgeleitet ist, durch den Zusatz "H" nach der analogen Aminosäure bezeichnet (z.B. steht "-AlaH" für den Rest "-NHCH(CH₃)C(O)H"). Trifluoromethylketone werden in gleicher Weise durch den Zusatz "CF₃" nach der analogen Aminosäure gekennzeichnet (z.B. steht "-AlaCF₃" für den Rest "-NHCH(CH₃)C(O)CF₃"). Schließlich werden die Hydrogensulfit-Addukte von Aldehyden durch den Zusatz "SO₃H" oder "SO₃Na" nach der analogen Aminosäure bezeichnet (z.B. steht "-TyrSO₃H" für den Rest "-NHCH(CH₂C₆H₄OH)CHOH-SO₃H").

Die Aldehyde der vorliegenden Erfindung können aus den entsprechenden Aminosäuren hergestellt werden, wobei die C-terminal Carboxylgruppe der Aminosäure in eine Aldehydgruppe umgewandelt wird. Derartige Aldehyde können mittels bekannter Verfahren hergestellt werden, wie z.B. in US 5015627, EP 0185930, EP 0583534 und DE 3200812 beschrieben.

Die Trifluoromethylketone können ebenfalls aus den korrespondierenden Aminosäuren hergestellt werden, indem die C-terminal Carboxylgruppe in eine Trifluoromethylketongruppe umgewandelt wird. Solche Trifluoromethylketone können mittels bekannter Verfahren, wie beispielsweise in der EP 0583535 beschrieben, hergestellt werden.

Das N-terminale Ende der Enzymstabilisatoren wird durch eine Schutzgruppe, die den N-Terminus verkappt geschützt, wobei die Gruppe ausgewählt wird aus Carbamaten, Harnstoffen, Sulfonamiden, Phosphonamiden, Thioharnstoffen, Sulfenamiden, Sulfonsäuren, Phosphinamiden, Thiocarbamaten, Amidophosphaten und Phosphonamiden. In einer bevorzugten Ausführungsform wird das N-terminale Ende jedoch durch eine Methyl-, Ethyl- oder Benzylcarbamatgruppe [CH₃O-(O)C-; CH₃CH₂O-(O)C- oder C₆H₅CH₂O-(O)C-], eine Methyl-, Ethyl- oder Benzylharnstoffgruppe [CH₃NH-(O)C-; CH₃CH₂NH-(O)C- oder C₆H₅CH₂NH-(O)C-], eine Methyl-, Ethyl- oder Benzylsulfonamidgruppe [CH₃SO₂-; CH₃CH₂SO₂- oder C₆H₅CH₂SO₂-], oder eine Methyl-, Ethyl oder Benzylamidophosphatgruppe [CH₃O(OH)(O)P-; CH₃CH₂O(OH)(O)P- oder C₆H₅CH₂O(OH)(O)P-] geschützt.

Die Synthese der N-Verkappungsgruppen kann beispielsweise den folgenden Dokumenten entnommen werden: Protective Groups in Organic Chemistry, Greene, T., Wuts, P., John Wiley & Sons, New York, 1991, pp 309-405; March, J, Advanced Organic Chemistry, Wiley Interscience, 1985, pp. 445, 469, Carey, F. Sundberg, R., Advanced Organic Chemistry, Part B, Plenum Press, New York, 1990, pp. 686-89; Atherton, E., Sheppard, R., Solid Phase Peptide Synthesis, Pierce Chemical, 1989, pp. 3-4; Grant, G., Synthetic Peptides, W. H. Freeman & Co. 1992, pp. 77-103; Stewart, J., Young, J., Solid Phase Peptide Synthesis, 2nd Edition, IRL Press, 1984, pp. 3,5,11,14-18, 28-29. Bodansky, M., Principles of Peptide Synthesis, Springer-Verlag, 1988, pp. 62, 203, 59-69; Bodansky, M., Peptide Chemistry, Springer-Verlag, 1988, pp. 74-81, Bodansky, M., Bodansky,A., The Practice of Peptide Synthesis, Springer-Verlag, 1984, pp. 9-32.

Beispielhafte Enzymstabilisatoren, die erfindungsgemäß eingesetzt werden können, umfassen, sind aber nicht beschränkt auf: CH₃O-(O)C-Leu-LeuH; CH₃O-(O)C-Ala-LeuH; CH₃CH₂O-(O)C-Ala-LeuH; C₆H₅CH₂O-(O)C-Ala-LeuH; CH₃O-(O)C-Ala-LeuCF₃; CH₃CH₂O-(O)C-Ala-LeuCF₃; C₆H₅CH₂O-(O)C-Ala-LeuCF₃; CH₃O-(O)C-Ala-IleH; CH₃CH₂O-(O)C-Ala-IleH; C₆H₅CH2O-(O)C-Ala-IleH; CH₃O-(O)C-Ala-IleCF₃; CH₃CH₂O-(O)C-Ala-IleCF₃; C₆H₅CH₂O-(O)C-Ala-IleCF₃; CH₃O-(O)C-Gly-LeuH; CH₃CH₂O-(O)C-Gly-LeuH; C₆H₅CH₂O-(O)C-Gly-LeuH; CH₃O-(O)C-Gly-LeuCF₃ ; CH₃CH₂O-(O)C-Gly-LeuCF₃; C₆H₅CH₂O-(O)C-Gly-LeuCF₃; CH₃O-(O)C-Gly-IleH; CH₃CH₂O-(O)C-Gly-IleH; C₆H₅CH₂O-(O)C-Gly-IleH; CH₃O-(O)C-Gly-IleCF₃; CH₃CH₂O-(O)C-Gly-IleCF₃; C₆H₅CH₂O-(O)C-Gly-IleCF₃; CH₃NH-(O)C-Ala-LeuH; CH₃CH₂NH-(O)C-Ala-LeuH; C₆H₅CH₂NH-(O)C-Ala-LeuH; CH₃NH-(O)C-Ala-LeuCF₃; CH₃CH₂NH-(O)C-Ala-LeuCF₃; C₆H₅CH₂NH-(O)C-Ala-LeuCF₃; CH₃NH-(O)C-Ala-IleH; CH₃CH₂NH-(O)C-Ala-IleH; C₆H₅CH₂NH-(O)C-Ala-IleH; CH₃NH-(O)C-Ala-IleCF₃; CH₃CH₂NH-(O)C-Ala-IleCF₃; C₆H₅CH₂NH-(O)C-Ala-IleCF₃; CH₃NH-(O)C-Gly-LeuH; CH₃CH₂NH-(O)C-Gly-LeuH; C₆H₅CH₂NH-(O)C-Gly-LeuH; CH₃NH-(O)C-Gly-LeuCF₃; CH₃CH₂NH-(O)C-Gly-LeuCF₃; C₆H₅CH₂NH-(O)C-Gly-LeuCF₃; CH₃NH-(O)C-Gly-IleH; CH₃CH₂NH-(O)C-Gly-IleH; C₆H₅CH₂NH-(O)C-Gly-IleH; CH₃NH-(O)C-Gly-IleCF₃; CH₃CH₂NH-(O)C-Gly-IleCF₃; C₆H₅CH₂NH-(O)C-Gly-IleCF₃; CH₃SO₂-Ala-LeuH; CH₃CH₂SO₂-Ala-LeuH; C₆H₅CH₂SO₂-Ala-LeuH; CH₃SO₂-Ala-LeuCF₃; CH₃CH₂SO₂-Ala-LeuCF₃; C₆H₅CH₂S₂-Ala-LeuCF₃; CH₃SO₂-Ala-IleH; CH₃CH₂SO₂-Ala-IleH; C₆H₅CH₂SO₂-Ala-IleH; CH₃SO₂-Ala-IleCF₃; CH₃CH₂SO₂-Ala-IleCF₃; C₆H₅CH₂SO₂-Ala-IleCF₃; CH₃SO₂-Gly-LeuH; CH₃CH₂SO₂-Gly-LeuH; C₆H₅CH₂SO₂-Gly-LeuH; CH₃SO₂-Gly-LeuCF₃; CH₃CH₂SO₂-Gly-LeuCF₃; C₆H₅CH₂SO₂-Gly-LeuCF₃; CH₃SO₂-Gly-IleH; CH₃CH₂SO₂-Gly-IleH; C₆H₅CH₂SO₂-Gly-IleH; CH₃SO₂-Gly-IleCF₃; CH₃CH₂SO₂-Gly-IleCF₃; C₆H₅CH₂SO₂-Gly-IleCF₃; CH₃O(OH)(O)P-Ala-LeuH; CH₃CH₂O(OH)(O)P-Ala-LeuH; C₆H₅CH₂O(OH)(O)P-Ala-LeuH; CH₃O(OH)(O)P-Ala-LeuCF₃; CH₃CH₂O(OH)(O)P-Ala-LeuCF₃; C₆H₅CH₂O(OH)(O)P-Ala-LeuCF₃; CH₃O(OH)(O)P-Ala-IleH; CH₃CH₂O(OH)(O)P-Ala-IleH; C₆H₅CH₂O(OH)(O)P-Ala-IleH; CH₃O(OH)(O)P-Ala-IleCF₃; CH₃CH₂O(OH)(O)P-Ala-IleCF₃; C₆H₅CH₂O(OH)(O)P-Ala-IleCF₃; CH₃O(OH)(O)P-Gly-LeuH; CH₃CH₂O(OH)(O)P-Gly-LeuH; C₆H₅CH₂O(OH)(O)P-Gly-LeuH; CH₃O(OH)(O)P-Gly-LeuCF₃; CH₃CH₂O(OH)(O)P-Gly-LeuCF₃; C₆H₅CH₂O(OH)(O)P-Gly-LeuCF₃; CH₃O(OH)(O)P-Gly-IleH; CH₃CH₂O(OH)(O)P-Gly-IleH; C₆H₅CH₂O(OH)(O)P-Gly-IleH; CH₃O(OH)(O)P-Gly-IleCF₃; CH₃CH₂O(OH)(O)P-Gly-IleCF₃; C₆H₅CH₂O(OH)(O)P-Gly-IleCF₃; CH₃O-(O)C-Val-Ala-LeuSO₃Na; C₆H₅CH₂O-(O)C-Gly-Ala-TyrH; C₆H₅CH₂O-(O)C-Gly-Ala-TyrSO₃H; C₆H₅CH₂O-(O)C-Gly-Ala-TyrSO₃Na; C₆H₅O-(O)C-Gly-Ala-TyrSO₃H; und C₆H₅O-(O)C-Gly-Ala-TyrSO₃Na. In den vorstehenden Verbindungen wird die oben beschriebene Terminologie zur Kenntlichmachung der Aldehyd- bzw. Trifluoromethylketongruppen verwenden.

In verschiedenen Ausführungsformen umfasst die Erfindung auch alle Stereoisomere, insbesondere Enantiomere und Diastereomere, Tautomere und Salze der vorstehend beschriebenen Verbindungen.

Generell können die als Stabilisatoren eingesetzten Peptidderivate und Peptidaddukte aus denen ausgewählt werden, die in den Patentveröffentlichungen WO 2013/004636 A1, WO 2014/173980 A2, WO 2013/004635 A1, WO 2014/124927 A3, WO 2009/118375 A2, US 6165966 A und US 2011/0039752 A1. Alternativ dazu sind Phosphoramidon oder Galardin, wie in CA 2704311 A1 beschrieben, geeignet.

Es ist generell bevorzugt, dass die Zusammensetzung A die mindestens eine Protease und ggf. Enzymstabilisatoren in Mengen enthält, die typischerweise in Enzymformulierungen als solchen aber nicht in enzymhaltigen Wasch- und Reinigungsmitteln eingesetzt werden. Der Aktivproteingehalt kann daher beispielsweise im Bereich von 1 bis 20 Gew.-% liegen, vorzugsweise im Bereich von 2 bis 15 Gew.-% oder 5 bis 10 Gew.-%. Die Menge an Stabilisator ist dann an die Enzymmenge angepasst und kann ebenfalls im Bereich von 1 bis 20 Gew.-% liegen.

In verschiedenen Ausführungsformen kann die Zusammensetzung A Wasser als Lösungsmittel enthalten, aber auch wasserarme bis wasserfreie Zusammensetzungen sind möglich. In letzteren werden dann insbesondere die oben genannten organischen Lösungsmittel eingesetzt.

Es ist bevorzugt, dass die erste enzymhaltige Zusammensetzung A neben der mindestens einen Protease sowie optional Tensid, Enzymstabilisator, Lösungsmittel, Salzen und/oder Wasser, keine weiteren Bestandteile enthält. Bei den Salzen kann es sich insbesondere um die oben im Kontext der Stabilisatoren genannten Salze oder auch um übliche Alkalimetall- und Erdalkalimetallsalze, insbesondere Halogenide, Carbonate und/oder Sulfate handeln. Es ist bevorzugt, dass Zusammensetzung A keine Komplexbildner, Builder oder Chelatoren enthält, insbesondere wenn es sich bei der mindestens einen Protease um eine Metalloprotease handelt.

Es ist ferner bevorzugt, dass der pH-Wert der Zusammensetzung A im Bereich von 5 bis 10 liegt, vorzugsweise im Bereich von 5,5 bis 9,5, noch bevorzugter 6,5 bis 9,0, am meisten bevorzugt im Bereich von 7,0 bis 8,8.

Beispielhafte Zusammensetzungen A enthalten (in Gew.-% bezogen auf das Gesamtgewicht der Zusammensetzung):
0,1 bis 50 Gew.-%, insbesondere 0,1 bis 20 Gew.-%, der mindestens einen Protease, insbesondere Metalloprotease;
0,1 bis 50 Gew.-%, insbesondere 0,1 bis 20 Gew.-%, mindestens eines Enzymstabilisators;
0 bis 90 Gew.-%, vorzugsweise 10 bis 90 Gew.-% eines organischen Lösungsmittels, insbesondere eines mehrwertigen Alkohols, wie insbesondere Glycerin, 1,2-Propandiol oder Sorbitol;
0 bis 10 Gew.-% eines Tensids, vorzugsweise eines alkoxylierten Alkohols, weiter bevorzugt eines Fettalkoholethoxylats und
0 bis 10 Gew.-% eines Salzes.

Die Summe der vorgenannten Bestandteile kann dabei 100 Gew.-% ergeben oder mit Wasser auf 100 Gew.-% aufgefüllt werden. Der pH-Wert einer solchen Zusammensetzung liegt vorzugsweise im Bereich von 5,5 bis 8. Die Zusammensetzung ist flüssig oder gelförmig.

Das in der Zusammensetzung B enthaltene von der Protease in Zusammensetzung A unterschiedliche Enzym kann ausgewählt werden aus weiteren Proteasen, Amylasen, Lipasen, Cellulasen, Mannanasen, Hemicellulasen, Perhydrolasen, Oxidoreduktasen und Kombinationen von mehreren davon. In verschiedenen Ausführungsformen enthält Zusammensetzung B mindestens eine Amylase und/oder mindestens eine von der in Zusammensetzung A enthaltenen Protease unterschiedliche Protease. In weiteren Ausführungsformen enthält Zusammensetzung B ferner zusätzlich mindestens ein weiteres Enzym. Geeignete Enzyme umfassen, ohne darauf beschränkt zu sein, Lipasen, Hemicellulasen, insbesondere Pektinasen und/oder Mannanasen, Cellulasen, Perhydrolasen oder Oxidoreduktasen, sowie vorzugsweise deren Gemische. Die Proteasen in Zusammensetzung B sind, sofern enthalten, vorzugsweise keine Metalloproteasen.

Diese Enzyme sind im Prinzip natürlichen Ursprungs; ausgehend von den natürlichen Molekülen stehen für den Einsatz in Wasch- und Geschirrspülmitteln verbesserte Varianten zur Verfügung, die entsprechend bevorzugt eingesetzt werden.

Die in Zusammensetzung B eingesetzten Proteasen, sind insbesondere Proteasen vom Subtilisin-Typ (Subtilasen, Subtilopeptidasen, EC 3.4.21.62), welche aufgrund der katalytisch wirksamen Aminosäuren Serin-Proteasen sind. Sie wirken als unspezifische Endopeptidasen und hydrolysieren beliebige Säureamidbindungen, die im Inneren von Peptiden oder Proteinen liegen. Ihr pH-Optimum liegt meist im deutlich alkalischen Bereich. Einen Überblick über diese Familie bietet beispielsweise der Artikel "Subtilases: Subtilisin-like Proteases" von R. Siezen, Seite 75-95 in "Subtilisin enzymes", herausgegeben von R. Bott und C. Betzel, New York, 1996. Subtilasen werden natürlicherweise von Mikroorganismen gebildet. Hierunter sind insbesondere die von Bacillus-Spezies gebildeten und sezernierten Subtilisine als bedeutendste Gruppe innerhalb der Subtilasen zu erwähnen sowie die aus dem Stand der Technik bekannten optimierten Varianten davon. In verschiedenen Ausführungsformen der Erfindung enthält Zusammensetzung A keine solchen Proteasen aus der Familie der Substilisine oder Varianten davon, sondern nur die oben beschriebenen Metalloproteasen.

Beispiele für erfindungsgemäß einsetzbare Amylasen sind die α-Amylasen aus *Bacillus licheniformis,* aus *B. amyloliquefaciens,* aus *B. stearothermophilus,* aus *Aspergillus niger* und *A. oryzae* sowie die für den Einsatz in Geschirrspülmitteln verbesserten Weiterentwicklungen der vorgenannten Amylasen.

Erfindungsgemäß einsetzbar sind weiterhin Lipasen oder Cutinasen, insbesondere wegen ihrer Triglycerid-spaltenden Aktivitäten, aber auch, um aus geeigneten Vorstufen *in situ* Persäuren zu erzeugen. Hierzu gehören beispielsweise die ursprünglich aus *Humicola lanuginosa* (*Thermomyces lanuginosus*) erhältlichen, beziehungsweise weiterentwickelten Lipasen.

Weiterhin können Enzyme eingesetzt werden, die unter dem Begriff Hemicellulasen zusammengefasst werden. Hierzu gehören beispielsweise Mannanasen, Xanthanlyasen, Pektinlyasen (= Pektinasen), Pektinesterasen, Pektatlyasen, Xyloglucanasen (= Xylanasen), Pullulanasen und β-Glucanasen.

Zur Erhöhung der bleichenden Wirkung können erfindungsgemäß Oxidoreduktasen, beispielsweise Oxidasen, Oxygenasen, Katalasen, Peroxidasen, wie Halo-, Chloro-, Bromo-, Lignin-, Glucose- oder Mangan-peroxidasen, Dioxygenasen oder Laccasen (Phenoloxidasen, Polyphenoloxidasen) eingesetzt werden. Vorteilhafterweise werden zusätzlich vorzugsweise organische, besonders bevorzugt aromatische, mit den Enzymen wechselwirkende Verbindungen zugegeben, um die Aktivität der betreffenden Oxidoreduktasen zu verstärken (Enhancer) oder um bei stark unterschiedlichen Redoxpotentialen zwischen den oxidierenden Enzymen und den Anschmutzungen den Elektronenfluss zu gewährleisten (Mediatoren).

Reinigungsaktive Enzyme werden in der Regel nicht in Form des reinen Proteins sondern vielmehr in Form stabilisierter, lager- und transportfähiger Zubereitungen bereitgestellt. Zu diesen vorkonfektionierten Zubereitungen zählen beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren oder weiteren Hilfsmitteln versetzt. Zusammensetzung A ist vorzugsweise eine solche vorkonfektionierte Enzymzubereitung.

Alternativ können die Enzyme sowohl für die feste als auch für die flüssige Darreichungsform verkapselt werden, beispielsweise durch Sprühtrocknung oder Extrusion der Enzymlösung zusammen mit einem vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalienundurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin ist es möglich, zwei oder mehrere Enzyme zusammen zu konfektionieren, so dass ein einzelnes Granulat mehrere Enzymaktivitäten aufweist.

Wie aus der vorherigen Ausführungen ersichtlich, bildet das Enzym-Protein nur einen Bruchteil des Gesamtgewichts üblicher Enzym-Zubereitungen. Erfindungsgemäß bevorzugt eingesetzte Enzym-Zubereitungen enthalten zwischen 0,1 und 40 Gew.-%, bevorzugt zwischen 0,2 und 30 Gew.-%, besonders bevorzugt zwischen 0,4 und 20 Gew.-% und insbesondere zwischen 0,8 und 10 Gew.-% des Enzymproteins.

Während die Enzymzubereitungen für Zusammensetzung A vorzugsweise in der vergleichsweise hohen Konzentration unverdünnt eingesetzt werden, d.h. 0,1 bis 50 Gew.-%, vorzugsweise 0,1 bis 20 Gew.-% Aktivprotein, kann Zusammensetzung B die Enzymzubereitungen in für Wasch- und Geschirrspülmittel üblichen Konzentrationen enthalten, d.h. bezogen auf das Gesamtgewicht, in einer Menge von 0,1 bis 12 Gew.-%, vorzugsweise 0,2 bis 10 Gew.-% und insbesondere 0,5 bis 8 Gew.-% Enzymzubereitungen. Dabei ist zu berücksichtigen, dass diese Zubereitungen, das Aktivprotein wiederum nur in der oben genannten Menge umfassen, so dass die Aktivproteinkonzentration der einzelnen Enzyme in Zusammensetzung B typischerweise im Bereich von 10⁻⁵ bis 1 Gew.-% liegt.

Ein Protein und/oder Enzym kann besonders während der Lagerung gegen Schädigungen wie beispielsweise Inaktivierung, Denaturierung oder Zerfall etwa durch physikalische Einflüsse, Oxidation oder proteolytische Spaltung geschützt werden. Bei mikrobieller Gewinnung der Proteine und/oder Enzyme ist eine Inhibierung der Proteolyse besonders bevorzugt, insbesondere wenn auch die Mittel Proteasen enthalten.

Zu diesem Zweck können die hierin beschriebenen Zusammensetzungen B ebenfalls die oben im Kontext mit Zusammensetzung A offenbarten Verbindungen als Stabilisatoren enthalten.

Besonders bevorzugt ist der Einsatz von Calciumsalzen, Polyolen, Boronsäuren und/oder Peptidderivaten/-addukten, insbesondere eine Kombination von Calciumsalzen, insbesondere Calciumchlorid, und Polyolen, insbesondere Sorbitol, mit Boronsäuren, wie 4-FPBA, oder mit Peptidadukkten, wie den oben beschriebenen. Die Calciumsalze werden dabei in den oben beschriebenen Mengen eingesetzt. Die Polyole werden üblicherweise in Mengen von 5 bis 10 Gew.-% bezogen auf das Gesamtgewicht der Zusammensetzung eingesetzt, die Boronsäuren/Peptidaddukte in Mengen von bis zu 1 Gew.-%, typischerweise bis 0,1 Gew.-%.

Die hierin beschriebenen Wasch- und Geschirrspülmittel sind vorzugsweise flüssiger Natur und können insbesondere als homogene Lösungen oder Suspensionen vorliegen, d.h. sowohl Zusammensetzung A als auch Zusammensetzung B sowie optional alle weiteren vorhandenen Zusammensetzungen liegen in flüssiger Form vor. Alternativ können auch nur die Zusammensetzungen A und B in flüssiger Form vorliegen und gegebenenfalls vorhandene weitere Zusammensetzungen liegen in fester Form vor. "Fest" bedeutet in diesem Kontext, dass die Zusammensetzung bei Standardbedingungen als Feststoff, insbesondere als Pulver oder Granulat oder Kompaktat vorliegt.

In einer weiteren bevorzugten Ausführungsform der Erfindung liegt das Wasch- oder Reinigungsmittel, vorzugsweise Wasch- oder Geschirrspülmittel, in einer vorportionierten Form vor. Das Wasch- oder Reinigungsmittel, vorzugsweise Wasch- oder Geschirrspülmittel, weist mehrere räumlich voneinander getrennte Zusammensetzungen auf, wodurch es zum einen möglich ist, nicht kompatible Inhaltsstoffe voneinander zu trennen, und zum anderen möglich ist Zusammensetzungen in Kombination anzubieten, welche zu unterschiedlichen Zeitpunkten zum Einsatz kommen.

Im Folgenden werden weitere Bestandteile der erfindungsgemäßen Mittel beschrieben, wobei diese Bestandteile vorzugsweise entweder in Zusammensetzung B oder in einer etwaig vorhandenen weiteren Zusammensetzung C bzw. etwaig vorhandenen weiteren Zusammensetzungen C, D, etc. enthalten sind, d.h. nicht in Zusammensetzung A. In einer Ausführungsform der Erfindung enthalten die Mittel der Erfindung daher über die Zusammensetzungen A und B hinaus mindestens eine weitere, von diesen räumlich getrennte Zusammensetzung C. Generell ist es bevorzugt, dass die weiteren Bestandteile, insbesondere wenn sie nicht ausreichend kompatibel mit Enzymen sind, in einer zusätzlich vorhandenen weiteren Zusammensetzung C, die ebenfalls räumlich von den Zusammensetzungen A und B getrennt ist, enthalten sind.

Die Wasch- oder Reinigungsmittel, vorzugsweise Wasch- oder Geschirrspülmittel, können ferner mindestens einen Builder (Gerüststoff) enthalten. Zu den einsetzbaren Gerüststoffen zählen insbesondere Carbonate, Citrate, Phosphonate, organische Gerüststoffe und Silikate. Der Gewichtsanteil der gesamten Gerüststoffe am Gesamtgewicht erfindungsgemäßer Mittel beträgt beispielsweise 15 bis 80 Gew.-%, noch bevorzugter 20 bis 70 Gew.-% und insbesondere 30 bis 50 Gew.-%.

Erfindungsgemäß geeignete organische Gerüststoffe sind beispielsweise die in Form ihrer Natriumsalze einsetzbaren Polycarbonsäuren (Polycarboxylate), wobei unter Polycarbonsäuren solche Carbonsäuren verstanden werden, die mehr als eine, insbesondere zwei bis acht Säurefunktionen, bevorzugt zwei bis sechs, insbesondere zwei, drei, vier oder fünf Säurefunktionen im gesamten Molekül tragen. Bevorzugt sind als Polycarbonsäuren somit Dicarbonsäuren, Tricarbonsäuren Tetracarbonsäuren und Pentacarbonsäuren, insbesondere Di-, Tri- und Tetracarbonsäuren. Dabei können die Polycarbonsäuren noch weitere funktionelle Gruppen, wie beispielsweise Hydroxyl- oder Aminogruppen, tragen. Beispielsweise sind dies Citronensäure, Adipinsäure, Bernsteinsäure, Glutarsäure, Äpfelsäure, Weinsäure, Maleinsäure, Fumarsäure, Zuckersäuren (bevorzugt Aldarsäuren, beispielsweise Galactarsäure und Glucarsäure), Aminocarbonsäuren, insbesondere Aminodicarbonsäuren, Aminotricarbonsäuren, Aminotetracarbonsäuren, wie beispielsweise Nitrilotriessigsäure (NTA), Methylglycindiessigsäure (MGDA), Glutamin-N,N-diessigsäure (auch als N,N-Bis(carboxymethyl)-L-glutaminsäure oder GLDA bezeichnet), Asparaginsäurediacetat (ASDA), Hydroxyethyliminodiacetat (HEIDA), Iminodisuccinat (IDS) und Ethylendiamindisuccinat (EDDS), und deren Derivate sowie Mischungen von diesen.

Bevorzugte Salze sind die Salze der Polycarbonsäuren wie Citronensäure, Adipinsäure, Bernsteinsäure, Glutarsäure, Weinsäure, MGDA und Mischungen aus diesen.

Weiterhin geeignet als organische Gerüststoffe sind polymere Polycarboxylate (organische Polymere mit einer Vielzahl, an (insbesondere größer zehn) Carboxylatfunktionen im Makromolekül), Polyaspartate, Polyacetale und Dextrine.

Die freien Säuren besitzen neben ihrer Builderwirkung typischerweise auch die Eigenschaft einer Säuerungskomponente und können somit auch zur Einstellung des pH-Werts dienen. Insbesondere sind hierbei Citronensäure, Bernsteinsäure, Glutarsäure, Adipinsäure, Gluconsäure und beliebige Mischungen aus diesen zu nennen.

Erfindungsgemäße Mittel können als Gerüststoff weiterhin kristalline schichtförmige Silikate der allgemeinen Formel NaMSiₓO₂ₓ₊₁ · y H₂O, worin M Natrium oder Wasserstoff darstellt, x eine Zahl von 1,9 bis 22, vorzugsweise von 1,9 bis 4, wobei besonders bevorzugte Werte für x 2, 3 oder 4 sind, und y für eine Zahl von 0 bis 33, vorzugsweise von 0 bis 20 steht. Einsetzbar sind auch amorphe Natriumsilikate mit einem Modul Na₂O:SiO₂ von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen. In bevorzugten erfindungsgemäßen Reinigungsmitteln, insbesondere Geschirrspülmitteln, bevorzugt maschinellen Geschirrspülmitteln, wird der Gehalt an Silikaten, bezogen auf das Gesamtgewicht des Reinigungsmittels, auf Mengen unterhalb 10 Gew.-%, vorzugsweise unterhalb 5 Gew.-% und insbesondere unterhalb 2 Gew.-% begrenzt. Es ist besonders bevorzugt, dass die Mittel frei von Silikaten sind, wobei "frei" in diesem Zusammenhang bedeutet, dass die Menge auf weniger als 0,1 Gew.-% begrenzt ist.

In verschiedenen Ausführungsformen enthalten erfindungsgemäße Wasch- oder Geschirrspülmittel als einen ihrer wesentlichen Gerüststoffe ein oder mehrere Salze der Citronensäure, also Citrate. In verschiedenen Ausführungsformen enthält Zusammensetzung A kein Citrat.

Bevorzugt ist ebenfalls der Einsatz von Carbonat(en) und/oder Hydrogencarbonat(en), vorzugsweise Alkalicarbonat(en), besonders bevorzugt Natriumcarbonat (Soda). In verschiedenen Ausführungsformen enthält Zusammensetzung A kein Carbonat/Hydrogencarbonat.

In Ergänzung zu den vorgenannten Gerüststoffen können die erfindungsgemäßen Wasch- oder Geschirrspülmittel, insbesondere Geschirrspülmittel, insbesondere in Zusammensetzung B oder noch bevorzugter C, weiterhin Alkalimetallhydroxide als Alkaliquelle enthalten. Diese Alkaliträger werden in den Mitteln und insbesondere in den zweiten Phasen (Zusammensetzung B) bevorzugt nur in geringen Mengen, vorzugsweise in Mengen unterhalb 10 Gew.-%, bevorzugt unterhalb 6 Gew.-%, vorzugsweise unterhalb 5 Gew.-%, besonders bevorzugt zwischen 0,1 und 5 Gew.-% und insbesondere zwischen 0,5 und 5 Gew.-%, jeweils bezogen auf das Gesamtgewicht der Zusammensetzung eingesetzt. Es ist allerdings bevorzugt, dass die Geschirrspülmittel nur geringe Mengen an NaOH enthalten, vorzugsweise sind sie frei von NaOH. In verschiedenen Ausführungsformen der Erfindung enthält Zusammensetzung A daher weniger als 1,05 Gew.-%, bezogen auf das Gesamtgewicht der Zusammensetzung A, NaOH, vorzugsweise weniger als 0,5 Gew.-% NaOH, noch bevorzugter ist Zusammensetzung A frei von NaOH. In verschiedenen Ausführungsformen der Erfindung ist Zusammensetzung A frei von Alkaliquellen. In verschiedenen weiteren Ausführungsformen enthält Zusammensetzung B weniger als 1,71 Gew.-%, bezogen auf das Gesamtgewicht der Zusammensetzung B, NaOH, vorzugsweise weniger als 1,0 Gew.-% NaOH, noch bevorzugter ist Zusammensetzung B frei von NaOH. In verschiedenen Ausführungsformen enthält Zusammensetzung B anstelle von NaOH Kaliumhydroxid (KOH) als Alkaliquelle, vorzugsweise in den oben angegeben Mengen, insbesondere bis 3,5 Gew.-%. Insbesondere werden die Alkalimetallhydroxide, vor allem KOH, in solchen Mengen eingesetzt, dass die gewünschten pH-Werte der Zusammensetzungen erreicht werden.

Vorzugsweise enthalten die Wasch- oder Reinigungsmittel ferner mindestens ein Tensid. Dabei können die Tenside sowohl in Zusammensetzung A als auch in Zusammensetzung B oder beiden enthalten sein. Bevorzugt in Zusammensetzung A einzusetzende Tenside wurden bereits oben beschrieben und werden im Folgenden detaillierter beschrieben. Die zusätzlichen Tenside, die im Folgenden beschrieben werden können in Zusammensetzung A enthalten sein, sind aber vorzugsweise in Zusammensetzung B oder einer weiteren Zusammensetzung C enthalten. Die im Folgenden beschriebenen Tenside, sind insbesondere solche, die in Geschirrspülmitteln, insbesondere in maschinellen Geschirrspülmitteln zum Einsatz kommen. Falls diese eingesetzt werden, handelt es sich bei den Mitteln vorzugsweise um Geschirrspülmittel. Alternativ können aber auch Tenside enigesetzt werden, wie sie vor allem in Waschmitteln zum Einsatz kommen, insbesondere die im Folgenden beschriebenen anionischen Tenside und Fettalkoholalkoxylate. Falls diese eingesetzt werden, handelt es sich bei den Mitteln vorzugsweise um Waschmittel.

Die enthaltenen Tenside umfassen vorzugsweise nichtionische Tenside. Als nichtionische Tenside können alle dem Fachmann bekannten nichtionischen Tenside eingesetzt werden. Bevorzugt werden zumindest in maschinellen Geschirrspülmitteln schwachschäumende nichtionische Tenside eingesetzt, insbesondere alkoxylierte, vor allem ethoxylierte, schwachschäumende nichtionische Tenside. Mit besonderem Vorzug enthalten die maschinellen Geschirrspülmittel nichtionische Tenside aus der Gruppe der alkoxylierten Alkohole. Bevorzugt einzusetzende Tenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen ((PO/EO/PO)-Tenside). Solche (PO/EO/PO)-Niotenside zeichnen sich darüber hinaus durch gute Schaumkontrolle aus.

Die erfindungsgemäßen Mittel, insbesondere Geschirrspülmittel, können ferner mindestens ein Sulfopolymer enthalten. Der Gewichtsanteil des Sulfopolymers am Gesamtgewicht der dieses enthaltenden Zusammensetzung, vorzugsweise B oder C, beträgt vorzugsweise von 0,1 bis 20 Gew.-%, insbesondere von 0,5 bis 15 Gew.-%, besonders bevorzugt 1,0 bis 10 Gew.-%, insbesondere von 2 bis 8 Gew.-%, vor allem von 3 bis 6 Gew.-%. Ganz besonders bevorzugt sind Zusammensetzungen, die bis zu 6 Gew.-% Sulfopolymer enthalten. Das Sulfopolymer wird üblicherweise in Form einer wässrigen Lösung eingesetzt, wobei die wässrigen Lösungen typischerweise 20 bis 70 Gew.-%, insbesondere 30 bis 50 Gew.-%, vorzugsweise etwa 35 bis 40 Gew.-% Sulfopolymere enthalten.

Als Sulfopolymer wird vorzugsweise ein copolymeres Polysulfonat, vorzugsweise ein hydrophob modifiziertes copolymeres Polysulfonat, eingesetzt.

Abhängig von dem gewünschten Einsatzzweck enthalten die erfindungsgemäßen Mittel vorzugsweise mindestens einen weiteren Bestandteil, vorzugsweise ausgewählt aus der Gruppe bestehend aus anionischen, kationischen und amphoteren Tensiden, insbesondere anionischen Tensiden, Bleichmitteln, Bleichaktivatoren, Bleichkatalysatoren, Verdickern, Sequestrierungsmitteln, Elektrolyten, Korrosionsinhibitoren, insbesondere Silberschutzmitteln, Glaskorrosionsinhibitoren, Schauminhibitoren, Farbstoffen, Duftstoffen, Bitterstoffen und antimikrobiellen Wirkstoffen.

Bevorzugte anionische Tenside sind Fettalkoholsulfate, Fettalkoholethersulfate, Dialkylethersulfate, Monoglyceridsulfate, Alkylbenzolsulfonate, Olefinsulfonate, Alkansulfonate, Ethersulfonate, n-Alkylethersulfonate, Estersulfonate und Ligninsulfonate. Ebenfalls im Rahmen der vorliegenden Erfindung verwendbar sind Fettsäurecyanamide, Sulfosuccinate (Sulfobernsteinsäureester), insbesondere Sulfobernsteinsäuremono- und -di-C₈-C₁₈-Alkylester, Sulfosuccinamate, Sulfosuccinamide, Fettsäureisethionate, Acylaminoalkansulfonate (Fettsäuretauride), Fettsäuresarcosinate, Ethercarbonsäuren und Alkyl(ether)phosphate sowie α-Sulfofettsäuresalze, Acylglutamate, Monoglyceriddisulfate und Alkylether des Glycerindisulfats.

Die anionischen Tenside werden vorzugsweise als Natriumsalze eingesetzt, können aber auch als andere Alkali- oder Erdalkalimetallsalze, beispielsweise Kalium- oder Magnesiumsalze, sowie in Form von Ammonium- oder Mono-, Di-, Tri- bzw. Tetraalkylammoniumsalzen enthalten sein, im Falle der Sulfonate auch in Form ihrer korrespondierenden Säure, z.B. Dodecylbenzolsulfonsäure.

Geeignete Amphotenside sind beispielsweise Betaine der Formel (Rⁱⁱⁱ)(R^{iv})(R^{v})N⁺CH₂COO⁻, in der Rⁱⁱⁱ einen gegebenenfalls durch Heteroatome oder Heteroatomgruppen unterbrochenen Alkylrest mit 8 bis 25, vorzugsweise 10 bis 21 Kohlenstoffatomen und R^{iv} sowie R^{v} gleichartige oder verschiedene Alkylreste mit 1 bis 3 Kohlenstoffatomen bedeuten, insbesondere C₁₀-C₁₈-Alkyl-dimethylcarboxymethylbetain und C₁₁-C₁₇-Alkylamidopropyl-dimethylcarboxymethylbetain.

Geeignete Kationtenside sind u.a. die quartären Ammoniumverbindungen der Formel (R^{vi})(R^{vii})(R^{viii})(R^{ix})N⁺ X⁻, in der R^{vi} bis R^{ix} für vier gleich- oder verschiedenartige, insbesondere zwei lang- und zwei kurzkettige, Alkylreste und X⁻ für ein Anion, insbesondere ein Halogenidion, stehen, beispielsweise Didecyl-dimethyl-ammoniumchlorid, Alkyl-benzyl-didecyl-ammoniumchlorid und deren Mischungen. Weitere geeignete kationische Tenside sind die quaternären oberflächenaktiven Verbindungen, insbesondere mit einer Sulfonium-, Phosphonium-, Jodonium- oderArsoniumgruppe, die auch als antimikrobielle Wirkstoffe bekannt sind. Durch den Einsatz von quaternären oberflächenaktiven Verbindungen mit antimikrobieller Wirkung kann das Mittel mit einer antimikrobiellen Wirkung ausgestaltet werden bzw. dessen gegebenenfalls aufgrund anderer Inhaltsstoffe bereits vorhandene antimikrobielle Wirkung verbessert werden.

Vorteilhafte Inhaltsstoffe erfindungsgemäßer Mittel sind beispielsweise auch offenbart in der internationalen Patentanmeldung WO 2009/121725, dort beginnend auf Seite 5, vorletzter Absatz, und endend auf Seite 13 nach dem zweiten Absatz. Auf diese Offenbarung wird ausdrücklich Bezug genommen und der dortige Offenbarungsgehalt in die vorliegende Patentanmeldung einbezogen.

Generell kann der pH-Wert der Zusammensetzungen mittels üblicher pH-Regulatoren eingestellt werden. In verschiedenen Ausführungsformen liegt der pH-Wert der Zusammensetzung A in einem Bereich von 5,5 bis 8,5, vorzugsweise 6,5 bis 8,0, besonders bevorzugt von 7,0 bis 7,5, insbesondere bei ungefähr 7,5, und der pH-Wert der Zusammensetzung B liegt in einem Bereich von 7,0 bis 12, vorzugsweise 8,0 bis 11,5, bevorzugt größer als 8, insbesondere 8,5 bis 11,5. Als pH-Stellmittel dienen Säuren und/oder Alkalien, vorzugsweise Alkalien. Geeignete Säuren sind insbesondere organische Säuren wie die Essigsäure, Zitronensäure, Glycolsäure, Milchsäure, Bernsteinsäure, Adipinsäure, Äpfelsäure, Weinsäure und Gluconsäure oder auch Amidosulfonsäure. Daneben können aber auch die Mineralsäuren Salzsäure, Schwefelsäure und Salpetersäure bzw. deren Mischungen eingesetzt werden. Geeignete Basen stammen aus der Gruppe der Alkali- und Erdalkalimetallhydroxide und -carbonate, insbesondere der Alkalimetallhydroxide, von denen Kaliumhydroxid bevorzugt ist. Bsonders bevorzugt wird zur Einstellung des pH-Werts die oben beschriebene Alkaliquelle verwendet. Auch wenn flüchtiges Alkali, beispielsweise in Form von Ammoniak und/oder Alkanolaminen, die bis zu 9 C-Atome im Molekül enthalten können, zur Einstellung des pH-Werts verwendet werden können, wobei das Alkanolamin ist hierbei ausgewählt werden kann aus der Gruppe bestehend aus Mono-, Di-, Triethanol- und -Propanolamin und deren Mischungen, wird vorzugsweise auf solche flüchtigen Alkaliquellen, insbesondere Ethanolamine verzichtet. In verschiedenen Ausführungsformen enthalten die Zusammensetzungen daher weniger als 1,75 Gew.-% Alkanolamin, insbesondere Monoethanolamin, ganz besonders bevorzugt sind sie frei davon. Es wurde gefunden, dass das Weglassen solcher Alkanolamine, die Stabilität der Zusammensetzungen erhöht.

"Ungefähr", wie hierin im Zusammenhang mit einem Zahlenwert verwendet, bedeutet der Zahlenwert ±5%. "Ungefähr 7,5", bedeutet daher 7,125 bis 7,875.

Zur Einstellung und/oder Stabilisierung des pH-Werts kann das erfindungsgemäße Mittel ein oder mehrere Puffersubstanzen (INCI Buffering Agents) enthalten, üblicherweise in Mengen von 0,001 bis 5 Gew.-%. Bevorzugt sind Puffersubstanzen, die zugleich Komplexbildner oder sogar Chelatbildner (Chelatoren, INCI Chelating Agents) sind. Besonders bevorzugte Puffersubstanzen sind die Citronensäure bzw. die Citrate, insbesondere die Natrium- und Kaliumcitrate, beispielsweise Trinatriumcitrat·2 H₂O und Trikaliumcitrat·H₂O.

Die Konfektionierung hierin beschriebener Mittel kann in unterschiedlicher Weise erfolgen. Die flüssigen Angebotsformen auf Basis von Wasser und/oder organischen Lösungsmitteln können verdickt, in Form von Gelen vorliegen.

In verschiedenen Ausführungsformen besitzt das Mittel bzw. die jeweilige flüssige Zusammensetzung direkt nach der Herstellung eine Viskosität oberhalb 2000 mPas (Brookfield Viscometer DV-II+Pro, Spindel 25, 30 rpm, 20°C), insbesondere zwischen 2000 und 10000 mPas.

Die hierin beschriebenen Wasch- und Reinigungsmittel werden vorzugsweise zu Dosiereinheiten vorkonfektioniert. Diese Dosiereinheiten umfassen vorzugsweise die für einen Reinigungsgang notwendige Menge an wasch- oder reinigungsaktiven Substanzen. Bevorzugte Dosiereinheiten weisen ein Gewicht zwischen 12 und 30 g auf. Das Volumen der vorgenannten Dosiereinheiten sowie deren Raumform sind mit besonderem Vorzug so gewählt, dass eine Dosierbarkeit der vorkonfektionierten Einheiten über die Dosierkammer einer Wasch- oder Geschirrspülmaschine gewährleistet ist. Das Volumen der Dosiereinheit beträgt daher bevorzugt zwischen 10 und 35 ml, vorzugsweise zwischen 12 und 30 ml.

Die Wasch- und Reinigungsmittel, insbesondere die vorgefertigten Dosiereinheiten weisen mit besonderem Vorzug eine wasserlösliche Umhüllung auf.

Die wasserlösliche Umhüllung wird vorzugsweise aus einem wasserlöslichen Folienmaterial, welches ausgewählt ist aus der Gruppe, bestehend aus Polymeren oder Polymergemischen, gebildet. Die Umhüllung kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein. Besonders bevorzugt sind Folien, die beispielsweise zu Verpackungen wie Schläuchen oder Kissen verklebt und/oder versiegelt werden können, nachdem sie mit einem Mittel befüllt wurden. In verschiedenen Ausführungsformen haben die Folien die Form von Mehrkammerpouches, wobei die Zusammensetzungen A und B räumlich getrennt in verschiedenen Kammern eines Pouches aus einer wasserlöslichen Folie vorliegen.

Es ist bevorzugt, dass die wasserlösliche Umhüllung Polyvinylalkohol oder ein Polyvinylalkoholcopolymer enthält. Wasserlösliche Umhüllungen, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Geeignete wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Umhüllung einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung der wasserlöslichen Umhüllung geeignetem Polyvinylalkohol-enthaltendem Folienmaterial kann zusätzlich ein Polymer ausgewählt aus der Gruppe umfassend (Meth)Acrylsäure-haltige (Co)Polymere, Polyacrylamide, Oxazolin-Polymere, Polystyrolsulfonate, Polyurethane, Polyester, Polyether, Polymilchsäure oder Mischungen der vorstehenden Polymere zugesetzt sein. Ein bevorzugtes zusätzliches Polymer sind Polymilchsäuren.

Bevorzugte Polyvinylalkoholcopolymere umfassen neben Vinylalkohol Dicarbonsäuren als weitere Monomere. Geeignete Dicarbonsäuren sind Itaconsäure, Malonsäure, Bernsteinsäure und Mischungen daraus, wobei Itaconsäure bevorzugt ist.

Ebenfalls bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Es kann bevorzugt sein, dass das Folienmaterial weitere Zusatzstoffe enthält. Das Folienmaterial kann beispielsweise Weichmacher wie Dipropylenglycol, Ethylenglycol, Diethylenglycol, Propylenglycol, Glycerin, Sorbitol, Mannitol oder Mischungen daraus enthalten. Weitere Zusatzstoffe umfassen beispielsweise Freisetzungshilfen, Füllmittel, Vernetzungsmittel, Tenside, Antioxidationsmittel, UV-Absorber, Antiblockmittel, Antiklebemittel oder Mischungen daraus.

Geeignete wasserlösliche Folien zum Einsatz in den wasserlöslichen Umhüllungen der wasserlöslichen Verpackungen gemäß der Erfindung sind Folien, die von der Firma MonoSol LLC beispielsweise unter der Bezeichnung M8630, C8400 oder M8900 vertrieben werden. Andere geeignete Folien umfassen Folien mit der Bezeichnung Solublon® PT, Solublon® GA, Solublon® KC oder Solublon® KL von der Aicello Chemical Europe GmbH oder die Folien VF-HP von Kuraray.

Die entsprechende Verwendung der erfindungsgemäßen Mittel ist ebenfalls Gegenstand der Erfindung.

Ein weiterer Erfindungsgegenstand ist ein Verfahren zur Reinigung von Textilien oder harten Oberflächen, das dadurch gekennzeichnet ist, dass in mindestens einem Verfahrensschritt ein erfindungsgemäßes Mittel angewendet wird. Gegenstand der vorliegenden Anmeldung ist somit insbesondere auch ein Verfahren zum Waschen von Textilien in einer automatischen Waschmaschine oder zur Reinigung von Geschirr in einer Geschirrspülmaschine, bei welchem das erfindungsgemäße Mittel während des Durchlaufens eines Wasch- oder Geschirrspülprogramms vor Beginn des Hauptspülgangs oder im Verlaufe des Hauptspülgangs in den Innenraum einer Wasch- oder Geschirrspülmaschine eindosiert wird. Die Eindosierung bzw. der Eintrag des erfindungsgemäßen Mittels in den Innenraum der Wasch- oder Geschirrspülmaschine kann manuell erfolgen, alternativ kann das Mittel mittels der Dosierkammer in den Innenraum der Wasch- oder Geschirrspülmaschine dosiert werden.

In verschieden Ausführungsformen zeichnen sich die oben beschriebene Verfahren dadurch aus, dass die Protease bei einer Temperatur von 0 bis 100°C, bevorzugt 0 bis 60°C, weiter bevorzugt 20 bis 40°C und am meisten bevorzugt bei 20°C eingesetzt wird.

Hierunter fallen sowohl manuelle als auch maschinelle Verfahren, wobei maschinelle Verfahren bevorzugt sind. Verfahren zur Reinigung von Textilien zeichnen sich im Allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einem Waschmittel oder einer Lösung oder Verdünnung dieses Mittels behandelt wird. Entsprechendes gilt für Verfahren zur Reinigung von allen anderen Materialien als Textilien, insbesondere von harten Oberflächen. Alle denkbaren Wasch- oder Reinigungsverfahren können in wenigstens einem der Verfahrensschritte um die Anwendung eines erfindungsgemäßen Wasch- oder Reinigungsmittels bereichert werden und stellen dann Ausführungsformen der vorliegenden Erfindung dar. Alle Sachverhalte, Gegenstände und Ausführungsformen, die für erfindungsgemäßen Mittel beschrieben sind, sind auch auf diesen Erfindungsgegenstand anwendbar. Daher wird an dieser Stelle ausdrücklich auf die Offenbarung an entsprechender Stelle verwiesen mit dem Hinweis, dass diese Offenbarung auch für die vorstehenden erfindungsgemäßen Verfahren gilt.

Alle Sachverhalte, Gegenstände und Ausführungsformen, die für die erfindungsgemäßen Mittel beschrieben sind, sind auch auf diesen Erfindungsgegenstand anwendbar. Daher wird an dieser Stelle ausdrücklich auf die Offenbarung an entsprechender Stelle verwiesen mit dem Hinweis, dass diese Offenbarung auch für die vorstehenden erfindungsgemäßen Verwendungen und Verfahren gilt.

### Beispiele

### Beispiel 1: Zusammensetzung

Eine beispielhafte Flüssigwaschmittelmatrix (einsetzbar als Phase B der Basiszusammensetzung (vor Enzymzugabe)) ist in der folgenden Tabelle 1 angegeben.

| **Inhaltsstoff** | **Gew.-%** |
|---|---|
| Propylenglykol | 8,2 |
| Glycerin | 10,5 |
| Optischer Aufheller | 0,6 |
| Lineares Alkylbenzolsulfonat | 22,0 |
| C_{13/15} Oxoalkohol mit 8 EO | 24,0 |
| Monoethanolamin zur Verseifung | 6,0 |
| C₁₂₋₁₈ Seife | 7,5 |
| Polyethylenimin Polymer | 6,0 |
| DTPMPA 7Na | 0,7 |
| Ethanol | 3,0 |
| Soil Release Polymer | 1,4 |
| Parfüm | 1,7 |
| Farbstoff | 0,01 |
| Wasser | 8,39 |

Die Rezeptur enthält 8,39 Gew.-% Wasser aus Zugabe und Rohstoffen. Alle Inhaltsstoffangaben als Aktivsubstanz.

### Beispiel 2: Lagerstabilität Enzyme in handelsüblicher Flüssigwaschmittelmatrix gemäß Tabelle 1

| Enzym | **Restaktivität in % nach 4 Wochen 40°C Lagerung** |
|---|---|
| Protease (Subtilisin) | 61% |
| Amylase | 33% |
| Mannanase | 20% |

Beispielhaft gezeigte Lagerdaten von üblicherweise verwendeten Waschmittelenzymen. 4 Wochen bei 40°C entsprechen sehr anspruchsvollen/harschen Bedingungen, so dass eine signifikante Abnahme der Restaktivität den Erwartungen entspricht.

### Beispiel 3: Lagerstabilität Enzyme in konzentrierter Formulierung

| Enzym | **Restaktivität** in % nach 8 Wochen 40°C Lagerung |
|---|---|
| Protease | 97% |
| Amylase | 90% |
| Mannanase | 81% |

Wenn die Enzympräparate in konzentrierter Form, also nicht in eine Waschmittelmatrix eingearbeitet, sondern in der vom Hersteller gelieferten Form, gelagert werden, sind diese sogar noch nach 8 Wochen bei 40°C sehr stabil.

### Beispiel 4: Lagerstabilität Metalloprotease

Eine handelsübliche Subtilisin-Protease und eine Metalloprotease gemäß der Erfindung werden jeweils auf gleichem Aktivitätslevel in eine handelsübliche flüssige Waschmittelmatrix (Tabelle 1) eingerührt und bei 40°C gelagert. Mittels eines üblichen Aktivitätsassays für Proteasen (Hydrolyse von suc-AAPF-pNA), wird die Startaktivität und die Restaktivität der Protease nach 2 Wochen Lagerung bei 40°C gemessen. Um harsche Bedingungen zu generieren werden die Proteasen in Waschmittelmatrix ohne Stabilisator (Borsäure) gelagert.

Die Aktivität der Protease wird durch die Freisetzung des Chromophors para-Nitroanilin aus dem Substrat Succinyl Alanin-Alanin-Prolin-Phenylalanin-para-Nitroanilid (AAPFpNA; Bachem L-1400) bestimmt. Die Freisetzung des pNA verursacht eine Zunahme der Extinktion bei 410 nm, deren zeitlicher Verlauf ein Maß für die enzymatische Aktivität ist. Die Messung erfolgte bei einer Temperatur von 25°C, bei pH 8,6 und einer Wellenlänge von 410 nm. Die Messzeit betrug 5 min bei einem Messintervall von 20 bis 60 Sekunden.
Messansatz:
10 µL AAPF-Lösung (70 mg/mL)
1000 µL Tris/HCI (0,1 M; pH 8,6 mit 0,1% Brij 35)
10 µL verdünnte Proteaselösung
Kinetik über 5 min bei 25°C (410 nm)

Wie erwartet ist die Metalloprotease in einer Waschmittelmatrix nicht stabil und die Enzymaktivität bricht bereits nach 2 Wochen fast vollständig ein. Dies trifft auf die Subtilisin-Protease nicht zu.

| Enzym | **Restaktivität** in % nach 2 Wochen 40°C Lagerung |
|---|---|
| Subtilisin-Protease | 90% |
| Metalloprotease | 23% |

Fazit: Die Metalloprotease ist in einer handelsüblichen Waschmittelmatrix nicht anwendbar.

### Beispiel 5: Lagerstabilität Metalloprotease in konzentrierter Formulierung

| Enzym | **Restaktivität** in % nach 2 Wochen 40°C Lagerung |
|---|---|
| Subtilisin-Protease | 100% |
| Metalloprotease | 94% |

Eine Lagerung der Metalloprotease in konzentrierter Form, außerhalb einer Waschmittelmatrix ist unproblematisch. Die Enzymaktivität bleibt auch nach 2 Wochen bei 40°C nahezu vollständig erhalten.

### Beispiel 6: Vergleich der Waschleistung

Eine Metalloprotease (mit der Aminosäuresequenz gemäß SEQ ID NO:1) wurde aktivitätsgleich zu einer Subtilisin-Protease in die entsprechende Waschflotte der in Beispiel 1 genannten Waschmittelmatrix gegeben.

Bedingungen: 20°C, 16°dH Wasser, 1 h,
Anschmutzungen:
1. CFT CS-38 (Eigelb/Kohlenstoff)
2. CFT C-05 (Blut/Milch/Tusche)
3. H-MR-B (Milch/Kohlenstoff)
4. CFT C-10 (Milch/Öl)
5. CFT CS-08 (Gras)

Ausgestanzte Gewebe (Durchmesser = 10 mm) wurden in Mikrotiterplatte vorgelegt, Waschlauge auf 20°C vortemperiert, Endkonzentration 4,7 g/L, Lauge und Enzym wurden auf die Anschmutzung gegeben, für 1 h bei 20°C und 600 rpm inkubiert. Anschließend wurde die Anschmutzung mehrmals mit klarem Wasser gespült, trocken gelassen und mit einem Farbmessgerät die Helligkeit bestimmt. Je heller das Gewebe wird, desto besser ist die Reinigungsleistung. Gemessen wurde hier der L-Wert = Helligkeit, je höher desto heller. Angegeben ist die Leistung auf der jeweiligen Anschmutzung in % bezogen auf die Subtilisin-Protease.

| | % zu Subtilisin-Referenz |
|---|---|
| 1 | 140 |
| 2 | 170 |
| 3 | 110 |
| 4 | 200 |
| 5 | 180 |

Fazit: Im Miniwaschtest zeigt sich eine deutlich verbesserte Waschleistung der Metalloprotease gegenüber der Subtilisin-Protease.

## Patentansprüche

1. Wasch- oder Reinigungsmittel, **dadurch gekennzeichnet, dass** das Mittel zwei räumlich voneinander getrennte enzymhaltige Zusammensetzungen A und B aufweist, wobei
(a) Zusammensetzung A flüssig ist und mindestens eine Protease, vorzugsweise mindestens eine Metalloprotease, umfasst;
(b) Zusammensetzung B mindestens ein von der Protease in der ersten enzym-haltigen Phase unterschiedliches Enzym umfasst.

2. Wasch- oder Reinigungsmittel nach Anspruch 1, **dadurch gekennzeichnet, dass** die enzymhaltige Zusammensetzung A die mindestens eine Protease in einer Menge Aktivprotein von 0,1 bis 50 Gew.-%, vorzugsweise 0,1 bis 20 Gew.-%, bezogen auf das Gesamtgewicht der Zusammensetzung A, enthält.

3. Wasch- oder Reinigungsmittel nach Anspruch 1 oder 2, **dadurch gekennzeichnet, dass** die erste enzymhaltige Zusammensetzung A mindestens ein organisches Lösungsmittel, vorzugsweise ausgewählt aus Glycerin, 1,2-Propandiol und Sorbitol, sowie Mischungen davon enthält, vorzugsweise in einer Menge von 0,1 bis 99,9 Gew.-%, weiter bevorzugt 10 bis 90 Gew.-%, bezogen auf das Gesamtgewicht der Zusammensetzung.

4. Wasch- oder Reinigungsmittel nach einem der Ansprüche 1 bis 3, **dadurch gekennzeichnet, dass** die erste enzymhaltige Zusammensetzung A neben der mindestens einen Protease keine weiteren Enzyme umfasst.

5. Wasch- oder Reinigungsmittel nach einem der Ansprüche 1 bis 4, **dadurch gekennzeichnet, dass** die erste enzymhaltige Zusammensetzung A mindestens ein Tensid, vorzugsweise einen alkoxylierten Alkohol, weiter bevorzugt ein Fettalkoholethoxylat, vorzugsweise in einer Menge von 0,01 bis 5 Gew.-%, bezogen auf das Gesamtgewicht der Zusammensetzung A, enthält.

6. Wasch- oder Reinigungsmittel nach einem der Ansprüche 1 bis 5, **dadurch gekennzeichnet, dass** die erste enzymhaltige Zusammensetzung A mindestens einen Enzymstabilisator und/oder Proteaseinhibitor, vorzugsweise in einer Menge von 0,1 bis 50 Gew.-%, weiter bevorzugt 0,1 bis 20 Gew.-%, bezogen auf das Gesamtgewicht der Zusammensetzung A, enthält.

7. Wasch- oder Reinigungsmittel nach einem der Ansprüche 1 bis 6, **dadurch gekennzeichnet, dass** die erste enzymhaltige Zusammensetzung A mindestens eine Metalloprotease enthält, wobei die mindestens eine Metalloprotease ausgewählt wird aus Metalloproteasen aus *B. amyloliquefaciens* und Varianten davon, vorzugsweise einer Metallprotease die eine Aminosäuresequenz umfasst, die mindestens 80% Sequenzidentität zu der in SEQ ID NO:1 angegebenen Aminosäuresequenz über die gesamte Länge aufweist.

8. Wasch- oder Reinigungsmittel nach einem der Ansprüche 1 bis 7, **dadurch gekennzeichnet, dass** die erste enzymhaltige Zusammensetzung A neben der mindestens einen Protease sowie optional Tensid, Enzymstabilisator, Lösungsmittel, Salzen und/oder Wasser, keine weiteren Bestandteile enthält.

9. Wasch- oder Reinigungsmittel nach einem der Ansprüche 1 bis 8, **dadurch gekennzeichnet, dass** die zweite enzymhaltige Zusammensetzung B mindestens ein Enzym ausgewählt aus der Gruppe der Proteasen, Amylasen, Lipasen, Cellulasen, Mannanasen, Hemicellulasen, Perhydrolasen, Oxidoreduktasen und Kombinationen von mehreren davon enthält.

10. Wasch- oder Reinigungsmittel nach einem der Ansprüche 1 bis 9, **dadurch gekennzeichnet, dass** die zweite enzymhaltige Zusammensetzung B mindestens eine von der in der ersten enzymhaltigen Zusammensetzung A unterschiedliche Protease enthält, vorzugsweise ausgewählt aus der Gruppe der Subtilisine und Varianten davon.

11. Wasch- oder Reinigungsmittel nach einem der Ansprüche 1 bis 10, **dadurch gekennzeichnet, dass** die zweite enzymhaltige Zusammensetzung B flüssig ist.

12. Wasch- oder Reinigungsmittel nach einem der Ansprüche 1 bis 11, **dadurch gekennzeichnet, dass** das Mittel in Form eines Mehrkammerpouches vorliegt und sich die Zusammensetzungen A und B in unterschiedlichen Kammern des Mehrkammerpouches befinden.

13. Wasch- oder Reinigungsmittel nach einem der Ansprüche 1 bis 12, **dadurch gekennzeichnet, dass** das Mittel
(a) in Form einer Einheitsdosis, vorzugsweise umhüllt von einer wasserlöslichen Folie, vorliegt; und/oder
(b) mindestens eine weitere Zusammensetzung C umfasst, die fest oder flüssig sein kann;
(c) die Zusammensetzung B mindestens einen weiteren Bestandteil ausgewählt aus der Gruppe der Gerüststoffe und Tenside umfasst; und/oder
(d) phosphatfrei ist.

14. Verwendung des Wasch- oder Reinigungsmittels gemäß einem der Ansprüche 1 bis 13 zum Waschen von Textilien oder maschinellen Reinigen von Geschirr.

15. Verfahren zum Waschen von Textilien oder maschinellen Reinigen von Geschirr, **dadurch gekennzeichnet, dass** in mindestens einem Verfahrensschritt ein Wasch- oder Reinigungsmittel gemäß einem der Ansprüche 1 bis 13 angewendet wird.
